(19) Europäisches Patentamt
European Patent Office
Office européen des brevets

(11) **EP 1 828 899 B1**

(12) **EUROPEAN PATENT SPECIFICATION**

(45) Date of publication and mention
of the grant of the patent:
**03.09.2008 Bulletin 2008/36**

(21) Application number: **05855538.4**

(22) Date of filing: **21.12.2005**

(51) Int Cl.:
**G06F 11/10** (2006.01)

(86) International application number:
**PCT/US2005/046996**

(87) International publication number:
**WO 2006/071837 (06.07.2006 Gazette 2006/27)**

(54) **METHOD AND SYSTEM FOR SYNDROME GENERATION AND DATA RECOVERY**

VERFAHREN UND SYSTEM ZUR SYNDROMERSTELLUNG UND DATENWIEDERHERSTELLUNG

PROCEDE ET SYSTEME DE GENERATION DE SYNDROME ET RECUPERATION DE DONNEES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **23.12.2004 US 21708**

(43) Date of publication of application:
**05.09.2007 Bulletin 2007/36**

(73) Proprietor: **Intel Corporation
Santa Clara, CA 95052 (US)**

(72) Inventors:
• **EDIRISOORIYA, Samantha
Tempe, AZ 85284 (US)**
• **TSE, Gregory
Tempe, AZ 85284 (US)**
• **SCHMISSEUR, Mark
Phoenix, AZ 85048 (US)**
• **SHEFFIELD, Robert
Chandler, AZ 85248 (US)**

(74) Representative: **Beresford, Keith Denis Lewis et al
BERESFORD & Co.
16 High Holborn
London WC1V 6BX (GB)**

(56) References cited:
**US-A- 5 099 484**          **US-A- 5 499 253**

**Description**

TECHNICAL FIELD

Embodiments of the invention relate to syndrome generation and data recovery, and more specifically to PQ RAID syndrome generation and data recovery.

BACKGROUND

With the increase in use of large-scale storage systems, such as with Fiber Channel and Gigabit Ethernet systems, there is an increase in the susceptibility of these systems to multiple disk failures. The rapid growth of disk capacity also prolongs the disk recovery time in the event of disk failures. This prolonged recovery time increases the probability of subsequent disk failures during the reconstruction of user data and parity information stored in a faulty disk. In addition, latent sector failures caused by data that was left unread for a long period of time may prevent data recovery after a disk failure that results in loss of data. The use of less expensive disks, such as ATA (Advanced Technology Attachment) disks, in arrays where high data integrity is required also increases the probability of such disk failures.

RAID (Redundant Array of Independent Disks) architectures have been developed to allow recovery from disk failures. Typically, the XOR (Exclusive-OR) of data from a number of disks is maintained on a redundant disk. In the event of a disk failure, the data on the failed disk is reconstructed by XORing the data on the surviving disks. The reconstructed data is written to a spare disk. However, data will be lost if the second disk fails before the reconstruction is complete. Traditional disk arrays that protect the loss of no more than one disk are inadequate for data recovery, especially for large-scale storage systems.

US 5,499,253 discloses systems and methods for performing the check code calculations for RAID 6 computer mass storage arrays such that it becomes computationally feasible to implement a RAID 6 system in software on a modern high-speed computer. For a standard "P+Q" RAID 6 array, the system and method of the present invention allow the calculation of both RAID 6 check codes in less than twice the time it takes to calculate simple RAID 5 parity. The system and method of the present invention are based on a careful matching of the characteristics of the Commutative Ring in which calculations take place to the capabilities of modern high-speed computers. In a particular embodiment, defining the mapping of data and check symbols to computer storage locations in a transposed manner affords a further reduction of computation time.

US 5,099,484 discloses an error detection and correction scheme utilizing a modified Reed-Solomon code which has been optimized to detect erroneous memory location accessing and catastrophic failure condition of data containing either all ones or all zeros for N-bit wide semiconductor random access memories. When data is written to memory, the scheme calculates a series of check bits to represent a data word and the address of the location that the data word is to be stored and stores that information in memory. When data is read from memory, a series of syndromes are calculated based upon the data read and its memory location. These syndromes are compared which enables the system to detect which symbol of the data word an error occurs and the corrected value of that symbol.

BRIEF DESCRIPTION OF THE DRAWINGS

The invention, which is defined in detail in the appended in dependent claims, is illustrated way of example, and not by way of imitation, in the figures of the accompanying drawings in which like reference numerals refer to similar elements.

FIG.1 is a block diagram illustrating a system that allows for recovery from multiple disk failures.

FIG. 2 is a table of example values for a Galois field.

FIG. 3 is a block diagram illustrating a system according to an embodiment of the invention.

FIG. 4 is a flow diagram illustrating a method according to an embodiment of the invention.

DETAILED DESCRIPTION

Embodiments of a system and method for syndrome generation and data recovery are described. In the following description, numerous specific details are set forth. However, it is understood that embodiments of the invention may be practiced without these specific details. In other instances, well-known circuits, structures and techniques have not been shown in detail in order not to obscure the understanding of this description.

Reference throughout this specification to "one embodiment" or "an embodiment" means that a particular feature, structure, or characteristic described in connection with the embodiment is included in at least one embodiment of the invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

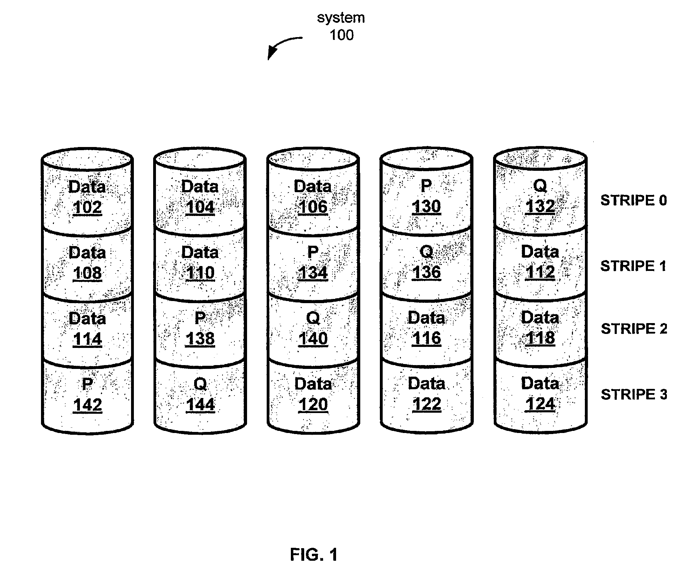

Referring to Fig. 1, a block diagram illustrates a system 100 that allows for recovery from multiple disk failures. The system 100 includes one or more storage blocks for storing data, such as 102-124, and two or more storage blocks for storing parity or syndrome information, such as 130-144. In one embodiment, the system 100 is a RAID (Redundant Array of Independent Disks) system. In one embodiment, two syndromes are generated and stored: P syndrome and Q syndrome. The P syndrome is generated by computing parity across a stripe. The Q syndrome is generated by using Galois Field multiplication. The regeneration scheme for data recovery uses both Galois Field multiplication and division.

The following are the equations for generating P and Q for a storage array with n data disks and two check disks:

$$P \quad = D_0 \oplus D_1 \oplus D_2 \ \ldots\ldots\ \oplus D_{n-1} \quad \text{(Equation 1)}$$

$$Q \quad = g^0{*}D_0 \oplus g^1{*}D_1 \oplus g^2{*}D_2 \ \ldots\ldots\oplus\ g^{n-1}{*}D_{n-1} \quad \text{(Equation 2)}$$

P is the simple parity of data (D) computed across a stripe using $\oplus$ (XOR) operations. Q requires multiplication (*) using a Galois Field multiplier (g).

The following equations show the generation of P and Q when updating a data block $D_a$:

$$P \text{ (new)} \quad = \ P(\text{old}) \oplus D_a\,(\text{old}) \oplus D_a\,(\text{new})$$

$$Q \text{ (new)} \quad = Q(\text{old}) \oplus g^a{*}D_a\,(\text{old}) \oplus g^a{*}D_a\,(\text{new}) \quad .$$

There are four cases of multiple disk failure that require recovery. In case one, P and Q fail. In this case, P and Q may be regenerated using Equations 1 and 2 shown above.

In case two, Q and a data disk ($D_a$) fail. In this case, $D_a$ may be regenerated using P and the remaining data disks via Equation 1. Q may then be regenerated using Equation 2.

In case three, P and a data disk ($D_a$) fail. In this case, $D_a$ may be regenerated using Q, the remaining data disks, and the following equation:

$$D_a \quad = (\ Q \oplus Q_a) * g^{-a} = (\ Q \oplus Q_a) * g^{255 - a} \ ,$$

where

$$Q_a \quad = g^0 D_0 \oplus g^1 D_1 \oplus \ldots \oplus g^{a-1}D_{a-1} \oplus g^{a+1}D_{a+1} \ldots\oplus g^{n-1}D_{n-1} \quad .$$

After $D_a$ is regenerated, P may be regenerated using Equation 1.

In case four, two data disks ($D_a$ and $D_b$) fail. In this case, $D_a$ and $D_b$ may be regenerated using P and Q, the remaining data disks, and the following equations:

$$D_a = (g^{-a} * (Q \oplus Q_{ab}) \oplus g^{b-a} * (P \oplus P_{ab})) / (g^{b-a} \oplus 0000\ 0001)$$

$$D_b = D_a \oplus (P \oplus P_{ab}),$$

where

$$P_{ab} = D_0 \oplus D_1 \oplus \ldots \oplus D_{a-1} \oplus D_{a+1} \ldots \oplus D_{b-1} \oplus D_{b+1} \ldots \oplus D_{n-1}$$

$$Q_{ab} = g^0 D_0 \oplus g^1 D_1 \oplus \ldots \oplus g^{a-1} D_{a-1} \oplus g^{a+1} D_{a+1} \ldots \oplus g^{b-1} D_{b-1} \oplus g^{b+1} D_{b+1} \ldots \oplus g^{n-1} D_{n-1} \quad .$$

The following are examples of recovery from disk failures in the cases described above. In the following examples, the datapath is assumed to be one byte or 8 bits wide. Therefore, a Galois Field, GF ($2^8$) is used. The invention may be implemented for datapaths that are more or less than one byte wide, and larger or smaller Galois fields may be used.

The following equations may be used for multiplying two 8-bit elements (b and c) to yield an 8-bit product (a). b = [b7 b6 b5 b4 b3 b2 b1 b0] and c = [c7 c6 c5 c4 c3 c2 c1 c0].

$$a0 = b0.c0 \oplus b7.c1 \oplus b6.c2 \oplus b5.c3 \oplus b4.c4 \oplus b3.c5 \oplus b7.c5 \oplus b2.c6 \oplus b7.c6 \oplus b6.c6 \oplus b1.c7 \oplus b7.c7 \oplus b6.c7 \oplus b5.c7$$

$$a1 = b1.c0 \oplus b0.c1 \oplus b7.c2 \oplus b6.c3 \oplus b5.c4 \oplus b4.c5 \oplus b3.c6 \oplus b7.c6 \oplus b2.c7 \oplus b7.c7 \oplus b6.c7$$

$$a2 = b2.c0 \oplus b1.c1 \oplus b7.c1 \oplus b0.c2 \oplus b6.c2 \oplus b7.c3 \oplus b5.c3 \oplus b6.c4 \oplus b4.c4 \oplus b5.c5 \oplus b3.c5 \oplus b7.c5 \oplus b2.c6 \oplus b7.c6 \oplus b6.c6 \oplus b4.c6 \oplus b1.c7 \oplus b3.c7 \oplus b6.c7 \oplus b5.c7$$

$$a3 = b3.c0 \oplus b2.c1 \oplus b7.c1 \oplus b1.c2 \oplus b7.c2 \oplus b6.c2 \oplus b0.c3 \oplus b6.c3 \oplus b5.c3 \oplus b7.c4 \oplus b5.c4 \oplus b4.c4 \oplus b6.c5 \oplus b4.c5 \oplus b3.c5 \oplus b7.c5 \oplus b2.c6 \oplus b6.c6 \oplus b5.c6 \oplus b3.c6 \oplus b2.c7 \oplus b4.c7 \oplus b1.c7 \oplus b5.c7$$

$$a4 = b4.c0 \oplus b3.c1 \oplus b7.c1 \oplus b2.c2 \oplus b7.c2 \oplus b6.c2 \oplus b1.c3 \oplus b7.c3 \oplus b6.c3 \oplus b5.c3 \oplus b0.c4 \oplus b6.c4 \oplus b5.c4 \oplus b4.c4 \oplus b5.c5 \oplus b4.c5 \oplus b3.c5 \oplus b2.c6 \oplus b4.c6 \oplus b3.c6 \oplus b1.c7 \oplus b7.c7 \oplus b2.c7 \oplus b3.c7$$

$$a5 = b5.c0 \oplus b4.c1 \oplus b3.c2 \oplus b7.c2 \oplus b2.c3 \oplus b7.c3 \oplus b6.c3 \oplus b1.c4 \oplus b7.c4 \oplus b6.c4 \oplus b5.c4 \oplus b0.c5 \oplus b6.c5 \oplus b5.c5 \oplus b4.c5 \oplus b5.c6 \oplus b4.c6 \oplus b3.c6 \oplus b2.c7 \oplus b4.c7 \oplus b3.c7$$

EP 1 828 899 B1

$$a6 = b6.c0 \oplus b5.c1 \oplus b4.c2 \oplus b3.c3 \oplus b7.c3 \oplus b2.c4 \oplus b7.c4 \oplus b6.c4 \oplus b1.c5 \oplus b7.c5 \oplus b6.c5 \oplus b5.c5 \oplus b0.c6 \oplus b6.c6 \oplus b5.c6 \oplus b4.c6 \oplus b5.c7 \oplus b4.c7 \oplus b3.c7$$

$$a7 = b7.c0 \oplus b6.c1 \oplus b5.c2 \oplus b4.c3 \oplus b3.c4 \oplus b7.c4 \oplus b2.c5 \oplus b7.c5 \oplus b6.c5 \oplus b1.c6 \oplus b7.c6 \oplus b6.c6 \oplus b5.c6 \oplus b0.c7 \oplus b6.c7 \oplus b5.c7 \oplus b4.c7$$

EP 1 828 899 B1

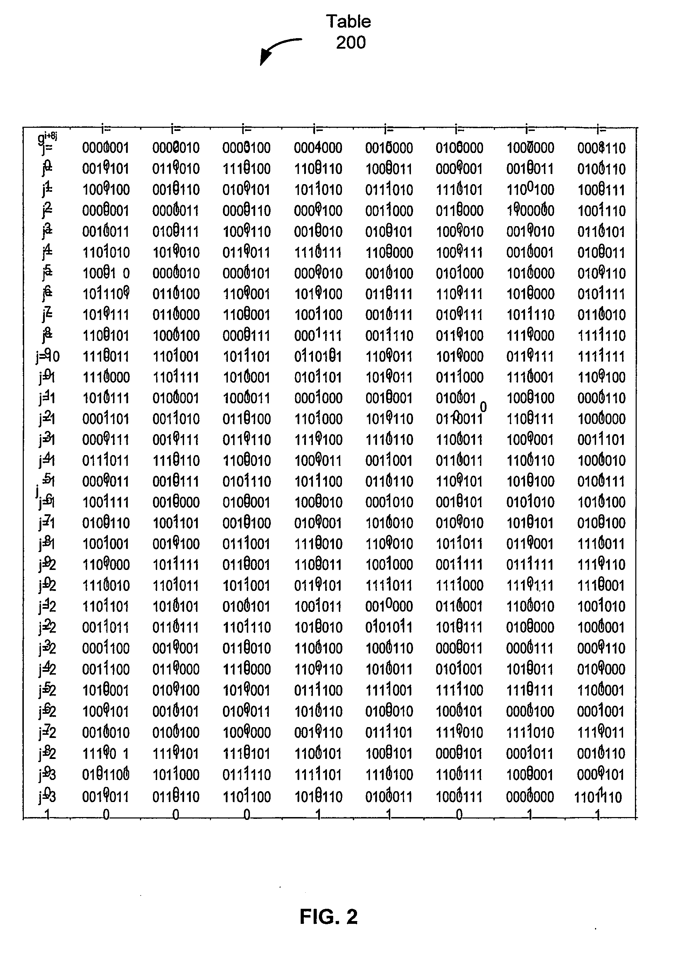

Fig. 2 shows a table 200 providing example values of the Galois field multiplier $g^a$ for g = 0000 0010. The negative power of a generator for $GF(2^8)$ can be computed using the following equation:

$$g^{-a} = g^{255-a} \ .$$

The following example shows how to generate P and Q parity for a disk array with four data disks and two parity disks. Assume that each data block contains one data byte. Let $D_i$ be the data contain in disk I (i=0,1,2,3). Consider the following data stripe: $D_0$ = 1011 0100, $D_1$ = 0010 1100, $D_2$ = 1100 0110 and $D_3$ = 1101 0101 .
Then, P may be generated using Equation 1 as follows:

$$P \quad = D_0 \oplus D_1 \oplus D_2 \oplus D_3$$

$$= 1011\ 0100 \oplus 0010\ 1100 \oplus 1100\ 0110 \oplus 1101\ 0101$$

$$= 1000\ 1011 \ .$$

Q may be generated using Equation 2 as follows:

$$Q \quad = g^0 D_0 \oplus g^1 D_1 \oplus g^2 D_2 \oplus g^3 D_3 \ .$$

From the table in Fig. 2, $g^\circ$ = 0000 0001, $g^1$ = 0000 0010, $g^2$ = 0000 0100, and $g^3$ = 0000 1000. Therefore,

$$Q \ = 0000\ 0001 * 1011\ 0100 \oplus 0000\ 0010 * 0010\ 1100 \oplus$$

$$0000\ 0100 * 1100\ 0110 \oplus 0000\ 1000 * 1101\ 0101$$

$$= 1011\ 0100 \oplus 0101\ 1000 \oplus 0011\ 1111 \oplus 1110\ 0110$$

$$= 0011\ 0101 \ .$$

The following example shows how to recover from two disk failures using the array generated above. In the first case, P and Q fail. In this case, P and Q are regenerated using Equations 1 and 2 as shown above. In the second case, Q and a data disk ($D_a$) fail. In this case, $D_a$ may be regenerated using P and the remaining data disks via Equation 1. Q may then be regenerated using Equation 2. In the third case, P and a data disk ($D_a$) fail. In this case, $D_a$ may be regenerated using Q, the remaining data disks, and the following equation:

$$D_a \quad = (Q \oplus Q_a) * g^{-a} = (Q \oplus Q_a) * g^{255-a} \ ,$$

where

$$Q_a = g^0 D_0 \oplus g^1 D_1 \oplus \ldots \oplus g^{a-1} D_{a-1} \oplus g^{a+1} D_{a+1} \ldots \oplus g^{n-1} D_{n-1} \ .$$

For example, suppose disk 2 fails. Then,

$$D_2 = ( Q \oplus Q_2 ) \cdot g^{253} = ( Q \oplus g^0 D_0 \oplus g^1 D_1 \oplus g^3 D_3 ) \cdot g^{253}$$

$$= (0011\ 0101 \oplus 0000\ 0001 * 1011\ 0100 \oplus 0000\ 0010 * 0010\ 1100 \oplus 0000\ 1000) * g^{253}$$

Using the table in Fig. 2, $g^{253}$ = 0100 0111. Therefore,

$$D_2 = (0011\ 0101 \oplus 1011\ 0100 \oplus 0101\ 1000 \oplus 1110\ 0110 ) * 0100\ 0111$$

$$= 0011\ 1111 * 0100\ 0111$$

$$= 1100\ 0110 \ .$$

P may then be regenerated using Equation 1, since all data blocks are now available.

In the fourth case, two data disks ($D_a$ and $D_b$) fail. In this case, $D_a$ and $D_b$ may be regenerated using P and Q, the remaining data disks, and the following equations:

$$D_a = (g^{-a} * ( Q \oplus Q_{ab}) \oplus g^{b-a} * ( P \oplus P_{ab} ) ) / (g^{b-a} \oplus 0000\ 0001)$$

$$D_b = D_a \oplus ( P \oplus P_{ab}) ,$$

where

$$P_{ab} = D_0 \oplus D_1 \oplus \ldots \oplus D_{a-1} \oplus D_{a+1} \ldots \oplus D_{b-1} \oplus D_{b+1} \ldots \oplus D_{n-1}$$

$$Q_{ab} = g^0 D_0 \oplus g^1 D_1 \oplus \ldots \oplus g^{a-1} D_{a-1} \oplus g^{a+1} D_{a+1} \ldots \oplus g^{b-1} D_{b-1} \oplus g^{b+1} D_{b+1} \ldots \oplus g^{n-1} D_{n-1} \ .$$

For example, assume that disks 1 and 3 failed. Then,

$$D_1 = (g^{-1} \cdot ( Q \oplus Q_{13} ) \oplus g^{3-1} * ( P \oplus P_{13} ) ) / (g^{3-1} \oplus 0000\ 0001)$$

$$= (g^{254} * ( Q \oplus Q_{13} ) \oplus g^2 * ( P \oplus P_{13} ) ) / (g^2 \oplus 0000\ 0001)$$

$$Q \oplus Q_{13} = 0011\ 0101 \oplus 0000\ 0001 * 1011\ 0100 \oplus 0000\ 0100 * 1100\ 0110$$

$$= 0011\ 0101 \oplus 1011\ 0100 \oplus 0011\ 1111 = 1011\ 1110 \quad ,$$

$$P \oplus P_{13} \qquad = 1000\ 1011 \oplus 1011\ 0100 \oplus 1100\ 0110 = 1111\ 1001$$

From the table in Fig. 2, $g^{254} = 1000\ 1110$ and $g^2 = 0000\ 0100$. Therefore,

$$D_1 \quad = ((1000\ 1110 * 1011\ 1110) \oplus (0000\ 0100 * 1111\ 1001\ )) /$$

$$(0000\ 0100 \oplus 0000\ 0001)$$

$$= (0101\ 1111 \oplus 1100\ 0011) / (0000\ 0101)$$

$$= (1011\ 1100) / (0000\ 0101)$$

$$= 0010\ 1100\ .$$

$$D_3 \quad = D_1 \oplus (P \oplus P_{13})$$

$$= 0010\ 1100 \oplus 1111\ 1001$$

$$= 1101\ 0101\ .$$

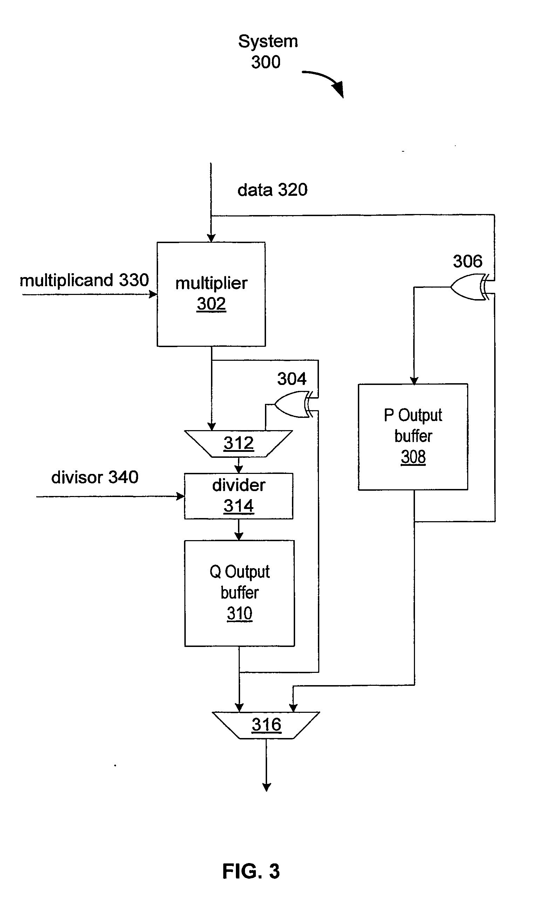

Fig. 3 is a block diagram of a system 300 according to an embodiment of the invention. System 300 includes a multiplier 302 and one or more comparators, such as 304 and 306. In one embodiment, one or more of the comparators are XOR (Exclusive-OR) gates. System 300 may also include one or more buffers, such as 308 and 310. The buffer 308 stores the output from the comparator 306. The comparator 306 compares the data 320 read from the storage blocks shown in Fig. 1 with the output of buffer 308. In this way, the comparator 306 may be used to compute the P syndrome described above, which is the parity across a stripe.

The multiplier 302 multiplies the multiplicand 330 with the data 320 read from the storage blocks shown in Fig. 1. In one embodiment, the multiplicand 330 is a Galois field, such as shown in Table 200 of Fig. 2. The output of the multiplier 302 is compared to the output of the buffer 310 by comparator 304. In this way, a Galois field multiplication may be performed and the Q syndrome may be computed. The multiplier 302 may also be used to perform the various multiplication operations for the equations described above with respect to the four cases in which multiple disks fail. Data may be allowed to pass through the multiplier by setting the multiplicand 330 equal to one. A selector 312 may be used to select between the output of the multiplier 302 and the output of the comparator 304. In one embodiment, the selector 312 is a multiplexer (MUX).

System 300 may also include a divider 314 to be used to perform the division operations for the equations described above with respect to the four cases in which multiple disks fail. For example, in case four, the computation for regeneration of $D_a$ has a division operation, which may be performed by divider 314. Data may be allowed to pass through the divider 314 by setting the divisor 340 equal to one. This may be desired when no division operation is required to be performed.

As shown in Fig. 3, the system 300 performs the generation of the P and Q syndromes in parallel. Other multiplication and division operations that are required may also be performed by system 300. A selector 316 may be used to select the desired output of the system. In one embodiment, the selector 316 is a multiplexer (MUX).

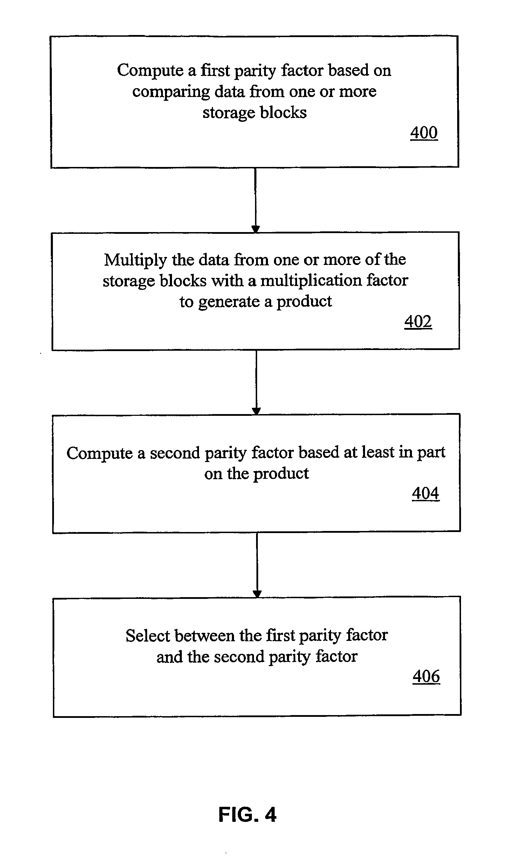

Fig. 4 illustrates a method for generating parity to aid in the recovery of data in one or more storage blocks according to one embodiment of the invention. At 400, a first parity factor is computed based on comparing data from one or more of the storage blocks. At 402, the data from one or more of the storage blocks is multiplied with a multiplication factor to generate a product. At 404, a second parity factor is computed based at least in part on the product. At 406, a selection is made between the first parity factor and the second parity factor. In one embodiment, the first parity factor is a P syndrome and the second parity factor is a Q syndrome as described above. In one embodiment, the second parity factor is further divided by a divisor. In one embodiment, the first parity factor and the second parity factor are buffered. In one embodiment, the first parity factor and the second parity factor are computed in parallel.

**Claims**

1. Apparatus (300) for utilisation in recovering data in one or more storage blocks comprising:

   a first comparator (306) operable to generate a first parity factor based on comparing data from one or more storage blocks;
   a multiplier (302) operable to multiply the data from one or more of the storage blocks with a multiplication factor to generate a product;
   a second comparator (304) coupled to the multiplier operable to generate in parallel with the generation of said first parity factor a second parity factor based at least in part on the product; and
   a selector (316) coupled to the first comparator and the second comparator operable to selectively output either the first parity factor or the second parity factor.

2. The apparatus of claim 1, wherein the first comparator and the second comparator are operable to function in parallel to generate the first parity factor and the second parity factor.

3. The apparatus of claim 1, further comprising a divider coupled to the second comparator operable to perform division operations on the second parity factor.

4. The apparatus of claim 1, further comprising a first buffer coupled to the first comparator operable to store the first parity factor.

5. The apparatus of claim 1, further comprising a second buffer coupled to the second comparator operable to store the second parity factor.

6. The apparatus of claim 1, wherein the first comparator is an XOR (Exclusive OR) gate.

7. The apparatus of claim 1, wherein the second comparator is an XOR (Exclusive OR) gate.

8. The apparatus of claim 1, wherein the multiplier is operable to perform Galois Field multiplication.

9. The apparatus of claim 1, wherein the first comparator is operable to generate a RAID (Redundant Array of Independent Disks) syndrome based on data from one or more of the storage blocks.

10. The apparatus of claim 9, wherein the second comparator is operable to generate a RAID (Redundant Array of Independent Disks) syndrome using an output from the multiplier.

11. The apparatus of claim 10, wherein the first comparator is operable to generate a RAID P-syndrome and the second comparator is operable to generate a RAID Q-syndrome.

12. A method for use in the recovery of data in one or more storage blocks comprising:

   computing (400) a first parity factor with a first comparator based on comparing data from one or more storage blocks;
   generating (402) a product by multiplying the data from one or more of the storage blocks with a multiplication factor;
   computing (404) a second parity factor in parallel with the computing of the first parity factor, wherein the second parity factor is computed based at least in part on said product with a second comparator coupled to receive said product; and selectively (406) outputting either the first parity factor or the second parity factor utilising a selector coupled to receive the first and second parity factors.

13. The method of claim 12, wherein computing a first parity factor comprises computing a RAID (Redundant Array of Independent Disks) P-Syndrome based on data from one or more of the storage blocks.

14. The method of claim 12, wherein computing a second parity factor comprises computing a RAID (Redundant Array of Independent Disks) Q-Syndrome based at least in part on the product.

15. The method of claim 12, wherein generating a product by multiplying the data from one or more of the storage blocks with a multiplication factor comprises multiplying the data from one or more of the storage blocks with a Galois field multiplicand.

16. The method of claim 12, further comprising dividing the second parity factor by divisor.

17. The method of claim 12, further comprising storing the first parity factor in a first buffer.

18. The method of claim 12, further comprising storing the second parity factor in a second buffer.

**Patentansprüche**

1. Vorrichtung (300) zur Verwendung bei der Wiedergewinnung von Daten in einem oder mehreren Speicherblöcken, mit
   einem ersten Komparator (306) zum Erzeugen eines ersten Paritätsfaktors aufgrund eines Vergleichs von Daten aus einem oder mehreren Speicherblöcken,
   einem Multiplizierer (302) zum Multiplizieren der Daten aus einem oder mehreren der Speicherblöcke mit einem Multiplikationsfaktor zur Erzeugung eines Produkts,
   einem mit dem Multiplizierer gekoppelten zweiten Komparator (304) zur Erzeugung eines zweiten Paritätsfaktors aufgrund mindestens teilweise des Produktes parallel zu der Erzeugung des ersten Paritätsfaktors, und
   einem mit dem ersten und dem zweiten Komparator gekoppelten Selektor (316) zur selektiven Ausgabe entweder des ersten oder des zweiten Paritätsfaktors.

2. Vorrichtung nach Anspruch 1, wobei der erste und der zweite Komparator zur Erzeugung des ersten und des zweiten Paritätsfaktors parallel betätigbar sind.

3. Vorrichtung nach Anspruch 1 mit einem mit dem zweiten Komparator gekoppelten Dividierer zur Durchführung von Divisionsvorgängen an dem zweiten Paritätsfaktor.

4. Vorrichtung nach Anspruch 1 mit einem mit dem ersten Komparator gekoppelten ersten Puffer zur Speicherung des ersten Paritätsfaktors.

5. Vorrichtung nach Anspruch 1 mit einem mit dem zweiten Komparator gekoppelten zweiten Puffer zum Speichern des zweiten Paritätsfaktors.

6. Vorrichtung nach Anspruch 1, wobei der erste Komparator ein XOR-Glied (Exklusiv-ODER-Glied) ist.

7. Vorrichtung nach Anspruch 1, wobei der zweite Komparator ein XOR-Glied (Exklusiv-ODER-Glied) ist.

8. Vorrichtung nach Anspruch 1, wobei der Multiplizierer so betätigbar ist, dass er eine Galoiskörper-Multiplikation durchführt.

9. Vorrichtung nach Anspruch 1, wobei der erste Komparator so betätigbar ist, dass er aufgrund von Daten aus einem oder mehreren der Speicherblöcke ein RAID-Syndrom (RAID = redundante Anordnung unabhängiger Platten) erzeugt.

10. Vorrichtung nach Anspruch 9, wobei der zweite Komparator so betätigbar ist, dass er unter Verwendung eines Ausgangssignals des Multiplizierers ein RAID-Syndrom (RAID = redundante Anordnung unabhängiger Platten) erzeugt.

11. Vorrichtung nach Anspruch 10, wobei der erste Komparator so betätigbar ist, dass er ein RAID-P-Syndrom erzeugt, und der zweite Komparator so betätigbar ist, dass er ein RAID-Q-Syndrom erzeugt.

12. Verfahren zur Verwendung bei der Wiedergewinnung von Daten in einem oder mehreren Speicherblöcken, wobei mit einem ersten Komparator aufgrund eines Vergleichs von Daten aus einem oder mehreren Speicherblöcken ein erster Paritätsfaktor berechnet wird (400),

durch Multiplizieren der Daten aus einem oder mehreren der Speicherblöcke mit einem Multiplikationsfaktor ein Produkt erzeugt wird (402),

parallel mit der Berechnung des ersten Paritätsfaktors ein zweiter Paritätsfaktor berechnet wird (404), wobei der zweite Paritätsfaktor mittels eines mit dem Produkt beaufschlagten zweiten Komparators mindestens teilweise aufgrund dieses Produkts berechnet wird, und

unter Verwendung eines mit dem ersten und dem zweiten Paritätsfaktor beaufschlagten Selektors entweder der erste oder der zweite Paritätsfaktor ausgegeben wird.

13. Verfahren nach Anspruch 12, wobei zum Berechnen des ersten Paritätsfaktors aufgrund von Daten aus einem oder mehreren der Speicherblöcke ein RAID-P-Syndrom (RAID = redundante Anordnung unabhängiger Platten) berechnet wird.

14. Verfahren nach Anspruch 12, wobei zum Berechnen des zweiten Paritätsfaktors mindestens teilweise aufgrund des Produktes ein RAID-Q-Syndrom (RAID = redundante Anordnung unabhängiger Platten) berechnet wird.

15. Verfahren nach Anspruch 12, wobei zum Erzeugen des Produktes durch Multiplizieren der Daten aus einem oder mehreren der Speicherblöcke mit dem Multiplikationsfaktor die Daten aus einem oder mehreren der Speicherblöcke mit einem Galoiskörper-Multiplikanden multipliziert werden.

16. Verfahren nach Anspruch 12, wobei der zweite Paritätsfaktor durch einen Teiler dividiert wird.

17. Verfahren nach Anspruch 12, wobei der erste Paritätsfaktor in einem ersten Puffer gespeichert wird.

18. Verfahren nach Anspruch 12, wobei der zweite Paritätsfaktor in einem zweiten Puffer gespeichert wird.


**Revendications**

1. Appareil (300) destiné à être utilisé pour récupérer des données dans un ou plusieurs blocs de stockage, comprenant :

   un premier comparateur (306) pouvant être mis en fonctionnement pour générer un premier facteur de parité sur la base d'une comparaison de données provenant d'un ou plusieurs blocs de stockage ;

   un multiplieur (302) pouvant être mis en fonctionnement pour multiplier les données provenant d'un ou plusieurs des blocs de stockage par un facteur de multiplication pour générer un produit ;

   un deuxième comparateur (304) relié au multiplieur et pouvant être mis en fonctionnement pour générer, en parallèle avec la génération dudit premier facteur de parité, un deuxième facteur de parité sur la base au moins en partie du produit ; et

   un sélecteur (316) relié au premier comparateur et au deuxième comparateur pouvant être mis en fonctionnement pour fournir sélectivement en sortie le premier facteur de parité ou le deuxième facteur de parité.

2. Appareil selon la revendication 1, dans lequel le premier comparateur et le deuxième comparateur peuvent être mis en fonctionnement pour fonctionner en parallèle afin de générer le premier facteur de parité et le deuxième facteur de parité.

3. Appareil selon la revendication 1, comprenant en outre un diviseur relié au deuxième comparateur pouvant être mis en fonctionnement pour effectuer des opérations de division sur le deuxième facteur de parité.

4. Appareil selon la revendication 1, comprenant en outre un premier tampon relié au premier comparateur et pouvant être mis en fonctionnement pour stocker le premier facteur de parité.

5. Appareil selon la revendication 1, comprenant en outre un deuxième tampon relié au deuxième comparateur et pouvant être mis en fonctionnement pour stocker le deuxième facteur de parité.

6. Appareil selon la revendication 1, dans lequel le premier comparateur est une porte OU-X (OU Exclusif).

7. Appareil selon la revendication 1, dans lequel le deuxième comparateur est une porte OU-X (OU Exclusif).

**8.** Appareil selon la revendication 1, dans lequel le multiplieur peut être mis en fonctionnement pour effectuer une multiplication sur un Champ de Galois.

**9.** Appareil selon la revendication 1, dans lequel le premier comparateur peut être mis en fonctionnement pour générer un syndrome RAID (Matrice Redondante de Disques Indépendants) sur la base de données provenant d'un ou plusieurs des blocs de stockage.

**10.** Appareil selon la revendication 9, dans lequel le deuxième comparateur peut être mis en fonctionnement pour générer un syndrome RAID (Matrice Redondante de Disques Indépendants) en utilisant une sortie du multiplieur.

**11.** Appareil selon la revendication 10, dans lequel le premier comparateur peut être mis en fonctionnement pour générer un syndrome P RAID et le deuxième comparateur peut être mis en fonctionnement pour générer un syndrome Q RAID.

**12.** Procédé pouvant être utilisé pour la récupération de données dans un ou plusieurs blocs de stockage, consistant à :

calculer (400) un premier facteur de parité à l'aide d'un premier comparateur sur la base de la comparaison de données provenant d'un ou plusieurs blocs de stockage ;
générer (402) un produit en multipliant les données provenant d'un ou plusieurs des blocs de stockage par un facteur de multiplication ;
calculer (404) un deuxième facteur de parité en parallèle avec le calcul du premier facteur de parité, dans lequel le deuxième facteur de parité est calculé sur la base au moins en partie dudit produit à l'aide d'un deuxième comparateur relié de façon à recevoir ledit produit ; et fournissant sélectivement en sortie (406) soit le premier facteur de parité soit le deuxième facteur de parité en utilisant un sélecteur relié de façon à recevoir les premier et deuxième facteurs de parité.

**13.** Procédé selon la revendication 12, dans lequel le calcul d'un premier facteur de parité comprend le calcul d'un syndrome P RAID (Matrice Redondante de Disques Indépendants) sur des données provenant d'un ou plusieurs des blocs de stockage.

**14.** Procédé selon la revendication 12, dans lequel le calcul d'un deuxième facteur de parité consiste à calculer un syndrome Q RAID (Matrice Redondante de Disques Indépendants) sur la base au moins en partie du produit.

**15.** Procédé selon la revendication 12, dans lequel le fait de générer un produit par multiplication des données provenant d'un ou plusieurs des blocs de stockage par un facteur de multiplication consiste à multiplier les données provenant d'un ou plusieurs des blocs de stockage par un multiplicande sur un champ de Galois.

**16.** Procédé selon la revendication 12, consistant en outre à diviser le deuxième facteur de parité par un diviseur.

**17.** Procédé selon la revendication 12, consistant en outre à stocker le premier facteur de parité dans un premier tampon.

**18.** Procédé selon la revendication 12, consistant en outre à stocker le deuxième facteur de parité dans un deuxième tampon.

system
100

| STRIPE 0 | Data 102 | Data 104 | Data 106 | P 130 | Q 132 |

FIG. 1

Table
200

| $g^{i+8j}$ / j= | i=0000001 | i=0000010 | i=0000100 | i=0001000 | i=0010000 | i=0100000 | i=1000000 | i=0000110 |
|---|---|---|---|---|---|---|---|---|
| j=0 | 0010101 | 0110010 | 1110100 | 1100110 | 1000011 | 0000001 | 0010011 | 0100110 |
| j=1 | 1000100 | 0010110 | 0100101 | 1011010 | 0111010 | 1110101 | 1100100 | 1000111 |
| j=2 | 0000001 | 0000011 | 0000110 | 0000100 | 0011000 | 0110000 | 1000000 | 1001110 |
| j=3 | 0010011 | 0100111 | 1000110 | 0010010 | 0100101 | 1000010 | 0010010 | 0110101 |
| j=4 | 1101010 | 1010010 | 0110011 | 1110111 | 1100000 | 1000111 | 0010001 | 0100011 |
| j=5 | 1000110 | 0000010 | 0000101 | 0000010 | 0010100 | 0101000 | 1010000 | 0100110 |
| j=6 | 1011100 | 0110100 | 1100001 | 1010100 | 0110111 | 1100111 | 1010000 | 0101111 |
| j=7 | 1010111 | 0110000 | 1100001 | 1001100 | 0010111 | 0100111 | 1011110 | 0110010 |
| j=8 | 1100101 | 1000100 | 0000111 | 0001111 | 0011110 | 0110100 | 1110000 | 1111110 |
| j=10 | 1110011 | 1101001 | 1011101 | 0110101 | 1100011 | 1010000 | 0110111 | 1111111 |
| j=11 | 1110000 | 1101111 | 1010001 | 0101101 | 1010011 | 0111000 | 1110001 | 1100100 |
| j=11 | 1010111 | 0100001 | 1000011 | 0001000 | 0010001 | 0100010 | 1000100 | 0000110 |
| j=21 | 0001101 | 0011010 | 0110100 | 1101000 | 1010110 | 0110011 | 1100111 | 1000000 |
| j=31 | 0000111 | 0010111 | 0110110 | 1110100 | 1110110 | 1100011 | 1000001 | 0011101 |
| j=41 | 0111011 | 1110110 | 1100010 | 1000011 | 0011001 | 0110011 | 1100110 | 1000010 |
| j=51 | 0000011 | 0010111 | 0101110 | 1011100 | 0110110 | 1100101 | 1010100 | 0100111 |
| j=61 | 1001111 | 0010000 | 0100001 | 1000010 | 0001010 | 0010101 | 0101010 | 1010100 |
| j=71 | 0100110 | 1001101 | 0010100 | 0100001 | 1010010 | 0100010 | 1010101 | 0100100 |
| j=81 | 1001001 | 0010100 | 0111001 | 1110010 | 1100010 | 1011011 | 0110001 | 1110011 |
| j=92 | 1100000 | 1011111 | 0110001 | 1100011 | 1001000 | 0011111 | 0111111 | 1110110 |
| j=02 | 1110010 | 1101011 | 1011001 | 0110101 | 1111011 | 1111000 | 1110111 | 1110001 |
| j=12 | 1101101 | 1010101 | 0100101 | 1001011 | 0010000 | 0110001 | 1100010 | 1001010 |
| j=22 | 0011011 | 0110111 | 1101110 | 1010010 | 0101011 | 1010111 | 0100000 | 1000001 |
| j=32 | 0001100 | 0010001 | 0110010 | 1100100 | 1000110 | 0000011 | 0000111 | 0000110 |
| j=42 | 0011100 | 0110000 | 1110000 | 1100110 | 1010011 | 0101001 | 1010011 | 0100000 |
| j=52 | 1010001 | 0100100 | 1010001 | 0111100 | 1111001 | 1111100 | 1110111 | 1100001 |
| j=62 | 1000101 | 0010101 | 0100011 | 1010110 | 0100010 | 1000101 | 0000100 | 0001001 |
| j=72 | 0010010 | 0100100 | 1000000 | 0010110 | 0111101 | 1110010 | 1111010 | 1110011 |
| j=82 | 1110001 | 1110101 | 1110101 | 1100101 | 1000101 | 0000101 | 0001011 | 0010110 |
| j=93 | 0101100 | 1011000 | 0111110 | 1111101 | 1110100 | 1100111 | 1000001 | 0000101 |
| j=03 | 0010011 | 0110110 | 1101100 | 1010110 | 0100011 | 1000111 | 0000000 | 1101110 |
| | 1 | 0 | 0 | 0 | 1 | 1 | 0 | 1 | 1 |

FIG. 2

FIG. 3

Compute a first parity factor based on
comparing data from one or more
storage blocks

<u>400</u>

Multiply the data from one or more of the
storage blocks with a multiplication factor
to generate a product

<u>402</u>

Compute a second parity factor based at least in part
on the product

<u>404</u>

Select between the first parity factor
and the second parity factor

<u>406</u>

**FIG. 4**

EP 1 828 899 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5499253 A
- US 5099484 A